# EUROPÄISCHE PATENTSCHRIFT

(11) **EP 2 026 539 B1**
(45) Veröffentlichungstag und Bekanntmachung des Hinweises auf die Patenterteilung: **09.12.2015**
(21) Anmeldenummer: 08009200.0
(22) Anmeldetag: 19.05.2008
(51) Int. Cl.: H04L 29/12, H04L 29/06

(54) **Verfahren zum Nutzbarmachen eines Internetidentifizierers in einem Telefonnetzwerk**
Method for making an internet identifier in a telephone network useable
Procédé destiné à rendre accessible un identifiant Internet dans un réseau téléphonique

(30) Priorität: 21.05.2007 DE 102007023844
(43) Veröffentlichungstag der Anmeldung: 18.02.2009
(73) Patentinhaber: Vodafone Holding GmbH, 40027 Düsseldorf (DE)
(72) Erfinder: Brücklmeier, Ralf, 40468 Düsseldorf (DE); Rodrigues, Bruno, 40219 Düsseldorf (DE)
(74) Vertreter: Jostarndt, Hans-Dieter

(56) Entgegenhaltungen:
- WO-A2-2005/084128
- WO-A2-2007/005124

## Beschreibung

### Technisches Gebiet

Die Erfindung betrifft ein Verfahren zum Aufbauen einer Kommunikationsverbindung von einem mit einem leitungsvermittelnden Telefonnetzwerk verbundenen ersten Endgerät eines ersten Teilnehmers zu einem mit einem IP-Netzwerk verbundenen zweiten Endgerät eines zweiten Teilnehmers, wobei das zweite Endgerät innerhalb des IP-Netzwerks anhand eines Internetidentifizierer des zweiten Teilnehmers identifizierbar ist.

### Hintergrund der Erfindung

In Kommunikationsnetzwerken, die auf dem Internetprotokoll (IP) basieren, können Datennachrichten, die von einem Teilnehmer über einen IP-basierten Kommunikationsdienst an einen Kommunikationspartner gesendet werden, anhand von Angaben adressiert sein, die in einfacher Weise mit dem Kommunikationspartner assoziiert werden können. So kann beispielsweise eine E-Mail-Adresse bereits den Namen oder einen Spitznamen enthalten. Im Rahmen von Instant-Messaging-Diensten (IM-Dieristen) oder Voice-over-IP-Diensten (VoIP) können gleichfalls derartige Adressen verwendet werden, um Datennachrichten an einen Kommunikationspartner zu senden. Derartige Adressen werden im Folgenden als Internetidentifizierer bezeichnet. Sie werden in dem IP-Netz in eine Netzwerkadresse des Kommunikationspartners umgewandelt, um eine Kommunikationsverbindung zu dem Kommunikationspartner aufbauen zu können, Ferner kann der Internetidentifizierer eines Teilnehmers beim Aufbau einer Kommunikationsverbindung zu einem Kommunikationspartner übertragen werden, so dass der Kommunikationspartner an dem Internetidentifizierer den Teilnehmer identifizieren kann, der eine Kommunikationsverbindung aufzubauen wünscht. Er kann den Inter-netidentifizierer speichern und später seinerseits verwenden, um eine Kommunikationsverbindung zu diesem Teilnehmer aufzubauen.

In Telefonnetzen ermöglichen die üblicherweise verwendeten Signalisierungsprotokolle lediglich eine Adressierung anhand von Nummern und wenigen Buchstaben. Statt der zuvor beschriebenen Internetidentifizierer erfolgt die Adressierung innerhalb von Telefonnetzen anhand von Rufnummern des Kommunikationspartners, insbesondere anhand sogenannter MSISDNs (Mobile Subscriber Integrated Services Digital Network Numbers). Die MSISDN eines Teilnehmers kann beim Aufbau einer Kommunikationsverbindung zu einem Kommunikationspartner an den Kommunikationspartner übermittelt werden. Dieser kann jedoch in der Regel keine Zuordnung zwischen dem Teilnehmer und seiner MSISDN vornehmen. Daher genügt in der Regel auch die Speicherung der MSISDN nicht, um den Teilnehmer zu identifizieren, wenn dieser beispielsweise zurückgerufen werden soll.

Um eine Kommunikationsverbindung aus einem Telefonnetz zu einem Teilnehmer in einem IP-Netz aufzubauen, kann dem Kommunikationspartner ebenfalls eine MSISDN zugewiesen werden, die in dem IP-Netz in den Internetidentifizierer oder die Netzwerkadresse des Kommunikationspartners umgewandelt wird. Wenn ein Teilnehmer in einem IP-Netz eine Kommunikationsverbindung zu einem Kommunikationspartner in einem Telefonnetz aufbaut, kann beim Verbindungsaufbau aus den zuvor genannten Gründen nicht der Internetidentifizierer des Teilnehmers an den Kommunikationspartner übermittelt werden, sondern lediglich die ihm zugeordnete MSISDN. Diese ist für den Kommunikationspartner, wie zuvor beschrieben, von wesentlich geringerem Nutzen als der Internetidentifizierer des Teilnehmers.

Dokument WO 2007/005124 A2 offenbart ein System zum Aufbau einer Kommunikation zwischen einem ersten Kommunikationsgerät verbunden mit einem Telefonetz und einem zweiten Kommunikationsgerät verbunden mit einem IP-Netz. Hierbei speichert ein Server des IP-Netzes eine Kontaktliste umfassend Rufnummern für das Telefonnetz und IP-Adressen für das IP-Netz. Nachdem sich das erste Kommunikationsgerät mittels einer vorbestimmten Rufnummer mit dem Server des IP-Netzes verbunden hat, stellt dieser dem ersten Kommunikationsgerät eine auf dem Server gespeicherte Kontaktliste für Teilnehmer im IP-Netz mit IP-Adressen zur Verfügung, die gegebenenfalls auch den augenblicklichen Status der Erreichbarkeit einer Liste an Personen im IP-Netz angibt. Für die Übermittlung der Liste vom Server an das erste Kommunikationsgerät ist allerdings zunächst eine Anforderung eines Verbindungsaufbaus vom ersten Kommunikationsgerät an den Server auszusenden.

### Darstellung der Erfindung

Es wäre daher wünschenswert, einem Teilnehmer, der über ein mit einem Telefonnetz verbundenes Kommunikationsendgerät verfügt, den Internetidentifizierer eines Kommunikationspartners bereitstellen zu können.

Erfindungsgemäß wird daher ein Verfahren nach dem Patentanspruch 1 , sowie ein System nach dem Patentanspruch 14 bereitgestellt, welches diesen Wunsch befriedigt.

Demgemäß ist es vorgesehen, ein Verfahren der eingangs genannten Art so durchzuführen, dass
- dem Internetidentifizierer eine Rufnummer zugeordnet wird, die für den Aufbau einer Kommunikationsverbindung von dem ersten Endgerät zu dem zweiten Endgerät herangezogen wird, wobei
- die Zuordnung zwischen dem Internetidentifizierer und der Rufnummer aufgrund eines erstmaligen Empfangs einer von dem zweiten Endgerät gesendeten Anforderung für den Aufbau einer Kommunikationsverbindung zu dem ersten Endgerät innerhalb des IP-Netzwerks an das erste Endgerät übermittelt und in einem in dem ersten Endgerät gespeicherten Adressbuch gespeichert wird, wobei
- von dem ersten Endgerät aufgrund einer Auswahl des Internetidentifizierers innerhalb des Adressbuchs eine Anforderung für den Aufbau der Kommunikationsverbindung zu dem zweiten Endgerät unter Verwendung der Rufnummer über das Telefonnetzwerk an das IP-Netzwerk gesendet wird.

Der Begriff Kommunikationsverbindung umfasst im Rahmen der Erfindung insbesondere Kommunikationsverbindungen, bei denen Daten zwischen den Endgeräten ausgetauscht werden. Bei derartigen Kommunikationsverbindungen wird die Anforderung für den Aufbau der Kommunikationsverbindung in der Regel gesendet, bevor nach der Annahme der Kommunikationsverbindung an dem zweiten Endgerät Daten zwischen den Endgeräten ausgetauscht werden können. Beispiele hierfür sind etwa Sprach- und/oder Videoanrufe. Ferner kann im Rahmen einer Kommunikationsverbindung auch eine Nachricht von dem ersten an das zweiten Endgerät gesendet und in dem zweiten Endgerät empfangen werden. In diesem Fall entspricht das Senden der Nachricht in der Regel der Anforderung für den Aufbau der Kommunikationsverbindung.

Die Erfindung beinhaltet die Idee, den Internetidentifizierer des zweiten Teilnehmers dadurch für den ersten Teilnehmer nutzbar zu machen, dass netzwerkgesteuert eine Zuordnung zwischen dem Internetidentifizierer und der Rufnummer des ersten Teilnehmers an das Endgerät des ersten Teilnehmers übermittelt wird, die innerhalb eines in dem Endgerät gespeicherten Adressbuchs gespeichert wird. Vorteilhaft kann der erste Teilnehmer den Internetidentifizierer dann dazu verwenden, eine Kommunikationsverbindung zu dem zweiten Teilnehmer aufzubauen, indem er den Internetidentifizierer innerhalb des Adressbuchs auswählt. Dadurch kann der Internetidentifizierer in dem ersten Endgerät in gleicher Weise verwendet werden, wie in einem mit dem IP-Netzwerk verbundenen Endgerät.

Da der Internetidentifizierer im Rahmen der üblicherweise in leitungsvermittelnden Telefonnetzwerken verwendeten Signalisierungsprotokolle nicht innerhalb einer Anforderung für einen Verbindungsaufbau übertragen werden kann, wird die Anforderung für den Verbindungsaufbau zu dem zweiten Teilnehmer aufgrund der Auswahl des Internetidentifizierers in dem Adressbuch vorteilhaft unter Verwendung der dem Internetidentifizierer zugeordneten Rufnummer über das Telefonnetzwerk an das IP-Netzwerk übermittelt.

Da die Identifizierung des Endgeräts des zweiten Teilnehmers innerhalb des IP-Netzwerks anhand des Internetidentifizierers des zweiten Teilnehmers erfolgt ist es zweckmäßig, die Zuordnung zwischen dem Internetidentifizierer und der Rufnummer des zweiten Teilnehmers innerhalb des IP-Netzwerks zu hinterlegen.

In einer Ausführungsform der Erfindung ist es daher vorgesehen, dass die Zuordnung zwischen dem Internetidentifizierer und der Rufnummer in einer mit dem IP-Netzwerk verbundenen Adressdatenbank gespeichert wird.

Die in der Adressdatenbank gespeicherte Zuordnung zwischen dem Internetidentifzierer und der Rufnummer erlaubt es insbesondere, die Anforderung für den Aufbau einer Kommunikationsverbindung innerhalb des IP-Netzwerks an das zweite Endgerät weiterzuleiten,

Eine Ausgestaltung der Erfindung sieht dabei vor, dass die Anforderung unter Verwendung des Internetidentifizierers des zweiten Teilnehmers an das zweite Endgerät weitergeleitet wird, wobei der Internetidentifizierer unter Heranziehung der in der Anforderung enthaltenen Rufnummer in der Adressdatenbank ermittelt wird.

Eine Weiterbildung der Erfindung beinhaltet, dass die Rufnummer mehreren Internetidentifizierern zugeordnet ist, wobei eine eindeutige Zuordnung zwischen dem Internetidentifizierer des zweiten Teilnehmers und einer Kombination aus der Rufnummer und einer dem ersten Teilnehmer zugeordneten Teilnehmernummer besteht.

Bei dieser Weiterbildung wird eine Rufnummer den Internetidentifizierern mehrerer Teilnehmer zugeordnet, die über ein mit dem IP-Netzwerk verbundenes Endgerät verfügen, wodurch die Anzahl der benötigten Rufnummern reduziert wird. Dabei besteht zwar keine eindeutige Zuordnung zwischen einem Internetidentifizierer und einer Rufnummer, eine Eindeutigkeit wird jedoch dadurch hergestellt, dass jeder Kombination aus der Rufnummer und einer Teilnehmernummer lediglich ein Internetidentifizierer zugeordnet wird. Unter einer Teilnehmernummer wird dabei eine Rufnummer verstanden, die ein mit dem Telefonnetzwerk verbundenes Endgerät eines Teilnehmers innerhalb des Telefonnetzwerks identifiziert.

Eine mit der zuvor genannten Weiterbildung verbundene Ausgestaltung der Erfindung ist dadurch gekennzeichnet, dass der Internetidentifizierer unter Heranziehung der dem ersten Teilnehmer zugeordneten Teilnehmernummer in der Adressdatenbank ermittelt wird.

Ferner ist es bei einer Ausführungsform der Erfindung vorgesehen, dass eine von dem zweiten Endgerät gesendete Anforderung für den Aufbau einer Kommunikationsverbindung zu dem ersten Endgerät unter Angabe der Rufnummer über das Telefonnetzwerk an das erste Endgerät übermittelt wird, wobei aufgrund der Anforderung in dem ersten Endgerät anhand des Adressbuchs unter Heranziehung der Rufnummer der Internetidentifizierer des zweiten Teilnehmers ermittelt und an dem ersten Endgerät angezeigt wird.

Vorteilhaft kann die in dem Adressbuch gespeicherte Zuordnung zwischen dem Internetidentifizierer und der Rufnummer in dieser Ausführungsform dazu genutzt werden, den Internetidentifizierer des zweiten Teilnehmers an dem ersten Endgerät anzuzeigen, wenn dieser von dem ersten Teilnehmer im Rahmen der Anforderung für den Aufbau einer Kommunikationsverbindung kontaktiert wird. Dies erlaubt dem ersten Teilnehmer eine Identifizierung des zweiten Teilnehmers anhand des angezeigten Internetidentifizierers. Somit erfolgt die Anzeige des Internetidentifizierers des zweiten Teilnehmers an dem ersten Endgerät in gleicher Weise, wie an einem mit dem IP-Netzwerk verbundenen Endgerät.

Gemäß einer Ausgestaltung der Erfindung braucht der zweite Teilnehmer dabei keine Kenntnis der Rufnummer zu haben und kann die Anforderung in herkömmlicher Weise unter Angabe seines Internetidentifizierers an das IP-Netzwerk senden.

In dieser Ausgestaltung ist es vorgesehen, dass die von dem zweiten Endgerät gesendete Anforderung unter Angabe des lnternetidentifizierers des zweiten Teilnehmers an das IP-Netzwerk übermittelt wird, wobei der Interhetidentifizierer innerhalb des IP-Netzwerks durch die Rufnummer ersetzt wird, welche anhand des Internetidentifizierers in der Adressdatenbank ermittelt wird, und wobei die Anforderung nachfolgend an das Telefonnetzwerk weitergeleitet wird.

Ferner zeichnet sich eine Ausführungsform der Erfindung dadurch aus, dass die Zuordnung zwischen der Rufnummer und dem Internetidentifizierer aufgrund eines erstmaligen Empfangs einer von dem zweiten Endgerät gesendeten Anforderung für den Aufbau einer Kommunikationsverbindung zu dem ersten Endgerät innerhalb des IP-Netzwerks an das erste Endgerät übermittelt wird.

Diese Ausführungsform stellt sicher, dass innerhalb des Adressbuchs des ersten Endgeräts immer dann eine Zuordnung zwischen einer Rufnummer und ein Internetidentifizierer gespeichert wird, wenn das erste Endgerät von einem Teilnehmer kontaktiert wird, der über ein mit dem IP-Netzwerk verbundenes Endgerät verfügt. Hierdurch sind innerhalb des ersten Endräts Internetidentifizierer aller Teilnehmer verfügbar, welche den ersten Teilnehmer wenigstens einmal kontaktiert haben.

Darüber hinaus beinhaltet eine Ausgestaltung der Erfindung, dass die Zuordnung zwischen der Rufnummer und dem Internetidentifizierer aufgrund eines erstmaligen Empfangs einer von dem zweiten Endgerät gesendeten Anforderung für den Aufbau einer Kommunikationsverbindung zu dem ersten Endgerät innerhalb des IP-Netzwerks in der Adressdatenbank gespeichert wird.

Hierdurch ist sichergestellt, dass jedem Teilnehmer, der über ein mit dem IP-Netzwerk verbundenes Endgerät verfügt, nach der erstmaligen Kontaktierung des ersten Teilnehmers eine Rufnummer zugeordnet ist, die von dem ersten Teilnehmer beispielsweise für den Aufbau einer Kommunikationsverbindung genutzt werden kann,

Gleichfalls kann es von dem ersten Teilnehmer auch gewünscht sein, dass eine Zuordnung zwischen einer Rufnummer und einem Internetidentifizierer eines Teilnehmers bereits in dem Adressbuch des ersten Endgeräts gespeichert wird, bevor dieser Teilnehmer den ersten Teilnehmer erstmalig kontaktiert.

Daher es in einer Weiterbildung der Erfindung vorgesehen, dass der erste Teilnehmer eine Kontaktliste erstellt, die in dem IP-Netzwerk verfügbar gemacht wird und wenigstens den Internetidentifizierer des ersten Teilnehmers umfasst, wobei die Zuordnung zwischen dem Internetidentifizierer und der Rufnummer aufgrund eines Empfangs der Kontaktliste in dem IP-Netzwerk an das erste Endgerät gesendet wird.

Die Kontaktliste kann beispielsweise innerhalb einer Nachricht, insbesondere innerhalb einer SMS-Nachricht von dem ersten Endgerät über das Telefonnetzwerks an das IP-Netzwerk gesendet werden. Wenn der erste Teilnehmer neben dem ersten Endgerät über ein weiteres Endgerät verfügt, welches mit dem IP-Netzwerk verbunden ist, kann er die Kontaktliste gleichfalls auch mittels dieses Endgeräts erstellen und direkt an das IP-Netzwerk senden.

Um sicherzustellen, dass für jeden Internetidentifizierer eine zuordenbare Rufnummer vorhanden ist, sieht eine Ausgestaltung der Erfindung weiterhin vor, dass die Zuordnung zwischen dem Internetidentifizierer und der Rufnummer aufgrund des netzwerkseitigen Empfangs der Kontaktliste in der Adressdatenbank gespeichert wird.

In einer weiteren Ausführungsform der Erfindung ist es vorgesehen, dass die Zuordnung zwischen dem Internetidentifizierer und der Rufnummer mittels einer SMS-Nachricht an das erste Endgerät gesendet werden,

Vorteilhaft wird bei dieser Ausführungsform der Short Message Service (SMS) zur Übermittelung des Internetidentifizierer und der Rufnummer an das Kommunikationsendgerät des zweiten Teilnehmers genutzt, der eine Nachrichtenübermittelung innerhalb eines leitungsvermittelnden Telefonnetzes ermöglicht.

Ferner zeichnet sich eine Ausführungsform der Erfindung dadurch aus, dass das erste Endgerät über eine paketvermittelnde Verbindung mit dem IP-Netzwerk verbindbar ist und die Zuordnung zwischen dem Internetidentifizierer und der Rufnummer über die paketvermittelnde Verbindung an das erste Endgerät gesendet wird.

Bei dieser Ausgestaltung kann vorteilhaft die beispielsweise in Mobilfunknetzen bestehende Möglichkeit, dass ein Endgerät auch über eine paketvermittelnde Kommunikationsverbindung mit einem IP-Netzwerk verbindbar ist, dazu genutzt werden, den Internetidentifizierer und die Rufnummer an das Kommunikationsendgerät des zweiten Teilnehmers zu übermitteln.

Eine Ausführungsform der Erfindung ist zudem dadurch gekennzeichnet, dass innerhalb des erste Endgeräts eine Applikation gespeichert wird, welche aufgrund des Empfangs die Zuordnung zwischen dem Internetidentifizierer und der Rufnummer in dem ersten Endgerät einen die Zuordnung enthaltenden Eintrag in dem Adressbuch des ersten Endgeräts erzeugt.

Diese Ausführungsform hat den Vorteil, dass das Kommunikationsendgerät des zweiten Teilnehmers durch das Aufspielen einer entsprechenden Applikation dafür ausgerüstet werden kann, automatisch einen die Zuordnung zwischen dem Internetidentifizierer und der Rufnummer enthaltenen Eintrag des Adressbuchs des Kommunikationsendgeräts zu erzeugen. Bei der Applikation kann es sich beispielsweise um eine Java-Applikation handeln. Eine Umgebung zur Ausführung von Java-Programmen gehört insbesondere bei modernen Mobiltelefonen zur Erstausstattung.

Die zuvor genannten und andere Vorteile, Besonderheiten und zweckmäßige Weiterbildungen werden auch anhand der Ausführungsbeispiele deutlich, die im Folgenden unter Bezugnahme auf die einzige Figur beschrieben werden.

### Kurze Beschreibung der Figur

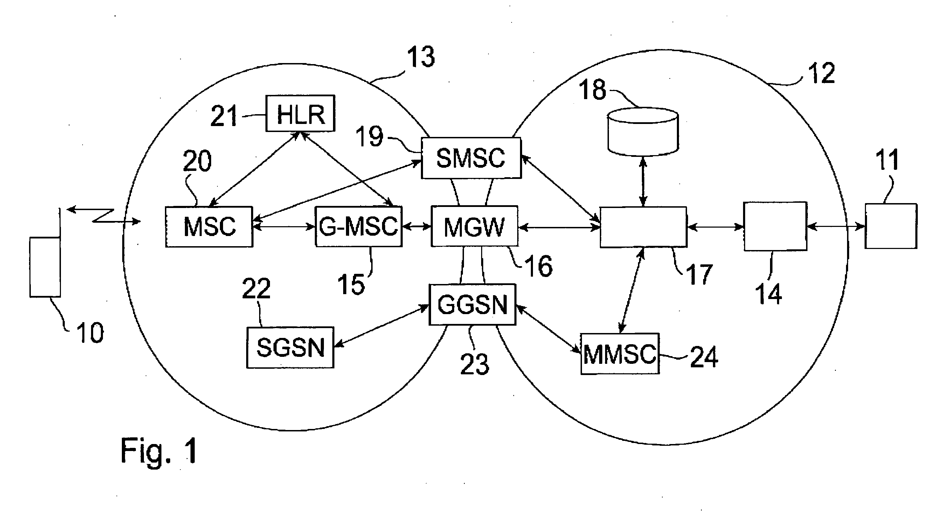

Figur 1 zeigt eine schematische Darstellung eines Kommunikationssystems, umfassend ein Mobilfunknetzwerk und ein 1P-Netzwerk.

### Ausführliche Beschreibung von Ausführungsbelspielen

Figur 1 zeigt ausgewählte Elemente eines Kommunikationssystems für eine Kommunikation zwischen einem mobilen Endgerät 10 eines Mobilfunknutzers und einem Kommunikationsendgerät 11 eines IP-Nutzers, welches mit einem auf dem Internet Protocol (IP) basierenden IP-Netzwerk 12 verbunden ist. Die Kommunikation erfolgt im Rahmen von Kommunikationsdiensten, bei denen es sich auf Seiten des IP-Netzwerks 12 beispielsweise um einen Instant Messaging (IM) Dienst zum Austausch so genannter Chat-Nachrichten, einen E-Mail-Dienst oder einen Voice over IP (VoIP) Dienst zur Übertragung von Sprach- und/oder Videoanrufen. Auf Seiten des Mobilfunknetzwerks 13 nutzbare Kommunikationsdienste umfassen beispielsweise Sprach - und/oder Videoanrufe, einen Kurznachrichtendienst (SMS) und einen Multimedia Message Service (MMS).

Das Mobilfunknetzwerk 13 umfasst ein leitungsvermittelndes (Circuit Switched (CS)) Netzwerk, das beispielsweise als CS-Domäne eines Mobilfunknetzwerks nach dem UMTS-Standard (UMTS: Universal Mobile Telecommunications System) oder als ein Mobilfunknetzwerk nach dem GSM-Standard (GSM: Global System for Mobile Communications) ausgestaltet ist, und dem Fachmann an sich bekannte Netzwerkelemente aufweist. Insbesondere weist das Mobilfunknetzwerk 13 mehrere Mobilfunkvermittlungsstellen (MSCs) 15, 20 zur Vermittlung von Kommunikationsverbindung auf, von denen in Figur 1 beispielhaft zwei dargestellt sind. Die MSCs 15, 20 können mit einem Heimatregister (HLR) 21 kommunizieren, in dem teilnehmerspezifische Daten von Mobilfunkteilnehmem gespeichert sind. Eine der dargestellten MSCs 15, 20 ist als eine Gateway-MSC (G-MSC) 15 ausgestaltet und ermöglicht eine Verbindung zwischen dem Mobilfunknetzwerk 13 und dem IP-Netzwerk 12. Ferner umfasst das Mobilfunknetzwerk 13 ein Short Message Service Center (SMSC) 19, welches insbesondere mit der Mobilvermittlungsstelle 20 verbunden ist. Das SMSC 19 ist zudem direkt an das IP-Netzwerk 12 angebunden.

Vorzugsweise umfasst das Mobilfunknetzwerk 13 neben der CS-Domäne auch eine paketvermittelnde (Packet Switchted (PS)) Domäne, die in einer dem Fachmann bekannte Weise ausgestaltet ist und es ermöglicht, mit den Mobilfunknetzwerk 13 verbundene Endgeräte über eine paketvermittelnde Kommunikationsverbindung mit dem IP-Netzwerk 12 zu verbinden. Die paketvermittelnde Domäne umfasst beispielsweise einen so genannten Serving GPRS Support Node (SGSN) 25, der mit dem Heimatregister 21 kommunizieren kann, sowie einen so genannten Gateway GPRS Support Node (GGSN) 26, über den der paketvermittelnde Teil des Mobilfunknetzwerks 13 mit dem IP-Netzwerk 12 verbunden ist. Innerhalb des paketvermittelnden Teils nutzbare Kommunikationsdienste umfassen einen Multimedia Message Service (MMS) zur Übertragung von MMS-Nachrichten, die Text-, Bild- und/oder Videodaten umfassen können. Zur Durchführung des MMS ist der GGSN 26 mit einem innerhalb des IP-Netzwerks 12 befindlichen Multimedia Message Service Center (MMSC) 27 verbunden.

Mit dem Mobilfunknetzwerk 13 ist eine Vielzahl von mobilen Endgeräten von Mobiifunkteitnehmern verbunden, von denen in Figur 1 beispielhaft eines dargestellt ist. Das mobile Endgerät 10 eines Mobilfunkteilnehmers ist über ein Figur 1 nicht dargestelltes Radionetzwerk mit dem Mobilfunknetzwerk 13 verbunden. Zur Eingabe und Wiedergabe von Daten weist das Endgerät 10 eine oder mehrere Eingabeeinrichtungen und Wiedergabeeinrichtungen auf. Die Eingabeeinrichtungen können beispielsweise eine Tastatur, ein Mikrofon und optional eine Videokamera umfassen, und bei den Wiedergabeeinrichtungen kann es sich beispielsweise um einen Lautsprecher und eine als Display ausgestaltete Anzeigeeinrichtung handeln. Ferner verfügt das Endgerät 10 über einen Prozessor, der mit einem Speicher verbunden ist, und zur Steuerung des Endgeräts 10 sowie zur Ausführung von in dem Speicher gespeicherten Applikationen genutzt wird. Bei den Applikationen kann es sich beispielsweise um Java-Applikationen handeln, die mittels einer ebenfalls in dem Endgerät 10 verfügbaren Programmausführungsumgebung ausgeführt werden können.

Insbesondere ist in dem Endgerät 10 ein Adressbuch gespeichert, in dem Einträge mit Zuordnungen zwischen Rufnummern (Mobile Subscriber ISDN Numbers (MSISDNs)) und Bezeichnungen von Kommunikationspartnern hinterlegt sind. Ein Eintrag des Adressbuchs umfasst mehrere Felder, von denen eins als Namensfeld ausgebildet ist, und die Bezeichnung eines Kommunikationspartners enthält, bei der es sich in der Regel um einen Namen oder Spitznamen des Kommunikationspartner handelt. Ein Rufnummerfeld eines Eintrags ist zur Speicherung der MSISDN eines Kommunikationspartners vorgesehen. Beim Aufrufen des Adressbuchs wird in der Regel eine Liste mit den in den Namensfeldern der in dem Adressbuch vorhandenen Einträge enthaltenen Bezeichnungen von Kommunikationspartner an der Anzeigeinrichtung des mobilen Endgeräts 10 angezeigt. In dieser Liste kann der Mobilfunkteilnehmer beispielsweise mittels der Tastatur des mobilen Endgeräts 10 die Bezeichnung eines Kommunikationspartners auswählen, woraufhin das mobile Endgerät 10 unter Verwendung der in dem Eintrag des Kammunikationspartners enthaltenen MSISDN eine Anforderung für den Aufbau einer Kommunikationsverbindung an das Mobilfunknetzwerk 13 sendet.

Im Rahmen des Kommunikationsdienstes für den Aufbau von Sprach- und/oder Videoanrufen erfolgt aufgrund der Anforderung ein Aufbau eines Sprach- und/oder Videoanrufs zu dem Endgerät eines Kommunikationspartners. Hierzu werden zunächst im Rahmen eines Signalisierungsprotokolls Signalisierungsnachrichten über das Mobilfunknetzwerk 13 an das Endgerät des Kommunikationspartners gesendet, das anhand der MSISDN identifiziert wird. Der Aufbau des Sprach- und/oder Videoanrufs erfolgt dann nach der Annahme des Anrufs an dem Endgerät des Kommunikationspartners. Das Senden einer SMS- oder MMS-Nachrichten entspricht bereits einer Anforderung für den Aufbau einer Kommunikationsverbindung. Daher enthalten SMS- oder MMS-Nachrichten bereits die MSISDN der Kommunikationspartner, an welche die Nachrichten zuzustellen sind und werden nach ihrem netzwerkseitigen Empfang an das Endgerät des Kommunikationspartners weitergeleitet oder können, wie es üblicherweise bei MMS-Nachrichten der Fall ist, mittels des Endgeräts des Kommunikationspartners abgerufen werden.

Das IP-Netzwerk 12 umfasst einen Kommunikationsserver 14 über den Kommunikationsverbindungen zu den mit dem Kommunikationsserver 14 verbundenen Kommunikationsendgeräten von IP-Nuztern aufgebaut werden können, wobei in Figur 1 beispielhaft ein Kommunikationsendgerät 11 dargestellt ist. Bei dem Kommunikationsendgerät 11 eines IP-Nutzers handelt es sich beispielsweise um ein so genanntes IP-Telefon, das im Rahmen eines VolP-Dienstes verwendet werden kann, oder um einen gewöhnlichen Personal Computer (PC) der über Software zur Teilnahme an einem VoiP-Dienst und den weiteren zuvor genannten Kommunikationsdiensten verfügt.

Zur Anbindung an den leitungsvermittelnden Teil des Mobilfunknetzwerks 13 ist innerhalb des IP-Netzwerks 12 ein mit der Gateway-MSC 15 verbundener Netzwerkknoten 16 vorgesehen, der als Media-Gateway bezeichnet wird und für den Aufbau von Sprach- und/oder Videoanrufen verwendet wird. Der Media-Gateway 16 wird durch eine Media Gateway Control Function (MGCF) gesteuert und führt Umsetzungen zwischen den in dem leitungsvermittelnden Teil des Mobilfunknetzwerks 13 und in dem IP-Netzwerk 12 verwendeten Signalisierungs- und Datenübertragungsprotokollen durch. Die Anforderung für den Aufbau eines Sprach- und/oder Videoanrufs erfolgt innerhalb des leitungsvermittelnden Teils des Mobilfunknetzwerks 13 beispielsweise anhand des "Signalling System Number 7" (SS7), insbesondere unter Verwendung des "ISDN User Part" (ISUP) Protokolls, und innerhalb des IP-Netzwerks 12 beispielsweise anhand des "Session Initiation Protocol" (SIP). Daher ist der Media-Gateway 15 insbesondere dazu ausgebildet, von der Gateway-MSC 15 übermittelte ISUP-Nachrichten in entsprechende SIP-Nachrichten und aus dem IP-Netzwerk 12 an das Mobilfunknetzwerk 13 bzw. die Gateway-MSC 15 gesendete SIP-Nachrichten in entsprechende ISUP-Nachrichten umzusetzen. Die Verwendung anderer Protokolle als der zuvor genannten ist jedoch gleichfalls möglich.

Die Übermittlung von SMS- und MMS-Nachrichten an das IP-Netzwerk 12 erfolgt über das SMSC 19 bzw. das MMSC 27, die beide direkt an das IP-Netzwerk 12 angebunden sind. SMS-Nachrichten, die über den leitungsvermittelnden Teil des Mobilfunknetzwerks 13 als SS7-Nachrichten übertragen werden, werden in dem SMSC 19 in ein innerhalb des IP-Netzwerks 13 verwendbares Format umgewandelt und anhand eines geeigneten, IP-basierten Protokolls von dem SMSC 19 weitergeleitet. Der MMS basiert bereits auf dem IP, so dass MMS-Nachrichten ohne Format- und/oder Protokolländerungen von dem MMSC 27 innerhalb des IP-Netzwerks 12 weitergeleitet werden können, Gleichfalls kann eine derartige Umwandlung jedoch vorgesehen sein, um eine Anpassung an die weiteren Netzwerkelement des IP-Netzwerks 12 vorzunehmen.

Der Aufbau einer Kommunikationsverbindung von dem mobilen Endgerät 10 des Mobilfunkteilnehmers zu dem Kommunikationsendgerät 11 erfolgt über einen an eine Adressdatenbank 18 angebundenen Adressserver 17, dessen Funktion später erläutert wird. Der Adressserver 17 ist einerseits mit dem Media-Gateway 16 und andererseits mit dem Kommunikationsserver 16 verbunden, so dass Sprach- und/oder Videoanrufe an das Kommunikationsendgerät 11 weitergeleitet werden können. Ferner ist der Adressserver 17 mit dem SMSC 19 und mit dem MMSC 27 verbunden, um von dem mobilen Endgerät 10 gesendete SMS- oder MMS-Nachrichten bzw. die in diesen Nachrichten enthaltenen Daten an das Kommunikationsendgerät 11 weiterzuleiten.

Innerhalb des IP-Netzwerks 12 erfolgt der Aufbau einer Kommunikationsverbindung zu einem Kommunikationsendgerät 11 eines IP-Nutzers anhand von Internetidentifizierern, die beispielsweise als URI (Uniform Resource Identifier) ausgestaltet sind und zur Identifizierung des IP-Nutzers bzw. seines Kommunikationsendgeräts 11 herangezogen werden. Hierbei handelt es sich um alphanumerische Zeichen enthaltende Kennungen, welche in der Regel einen Namen bzw. Kosenamen eines Teilnehmers des Kommunikationsdienstes umfassen. In der Regel sind die internetidentifizierer zudem hierarchisch aufgebaut und enthalten neben dem Namen des Nutzers - typischerweise durch ein @-Zeichen von dem Nutzernamen getrennt - die Bezeichnung des Servers, über den eine Kommunikationsverbindung zu dem Nutzer bzw. seinem Kommunikationsendgerät 11 hergestellt wird. Der Internetidentifizierer hat dementsprechend die Form "foo@bar.com", wobei der erste Bestandteil "foo" dem Nutzernamen und der zweite Bestandteil "bar.com" dem Domainnamen des Kommunikationsservers 14 entspricht, der Ober die Abfrage eines mit dem IP-Netzwerk 12 verbundenen so genannten Nameservers in die numerische IP-Adresse des Kommunikationsservers 14 umgesetzt werden kann.

Um innerhalb des IP-Netzwerks 12 beispielsweise einen Sprach- und/oder Videoanruf zu dem Kommunikationsendgerät 11 des Nutzers unter Verwendung des SIP aufzubauen, wird eine Anforderung für den Aufbau des Anrufs in Form einer SIP-Invite-Nachricht mit der Adresse "foo@bar.com" an den Kommunikationsserver 14 gesendet, der dabei anhand des Domainnamens "bar.com" identifiziert wird. Der Kommunikationsserver 14 leitet die SIP-Invite-Nachricht dann an das Kommunikationsendgerät 11 des Nutzers "foo" weiter. Hierfür ist der Kommunikationsserver 14 mit einer Lokationsdatenbank verbunden, in der insbesondere die IP-Adresse des Kommunikationsendgeräts 11 des IP-Nutzers gespeichert ist, die zur Identifizierung des Kommunikationsendgeräts 11 innerhalb des IP-Netzwerks 12 herangezogen wird. Neben dem zur Adressierung verwendeten Internetidentifizierer des als Empfänger vorgesehenen IP-Nutzers enthält die SIP-Invite-Nachricht auch den Internetidentifizierer des Absenders, d.h. des Kommunikationspartners der eine Kommunikationsverbindung zu dem Kommunikationsendgerät 11 des IP-Nutzers aufbauen möchte. Diese wird als Adresse für das Senden von Antworten auf die SIP-Invite-Nachricht und für den Sitzungsaufbau zwischen den Kommunikationsendgerät 11 und dem Kommunikationsendgerät 11 des IP-Nutzers verwendet. Ferner kann sie bei Erhalt der SIP-Invite-Nachricht an dem Kommunikationsendgerät 11 angezeigt werden, so dass der Nutzer Kenntnis über den Absender erhält.

IM- oder E-Mail-Nachrichten werden ebenfalls unter Verwendung des Internetidentifizierers des IP-Nutzers an dessen Kommunikationsendgerät 11 gesendet. Zusammen mit den Nachrichten kann ebenfalls der Internetidentifizierer des Absenders der Nachricht übermittelt werden. Dieser kann zum Senden von Antwortnachrichten verwendet werden und wird vorzugsweise zusammen mit der Nachricht an dem Kommunikationsendgerät 11 angezeigt, um den Absender der Nachricht zu identifizieren.

Innerhalb des Mobilfunknetzwerks 13 erfolgt eine Adressierung von Signalisierungsnachrichten für den Aufbau eines Sprach- und/oder Videoanrufs und die Adressierung von SMS- oder MMS-Nachrlchten hingegen, wie zuvor beschrieben, anhand von MSISDNs, die aus Ziffern bestehen und in dem Fachmann bekannter Weise für das Routing einer Anforderung für einen Verbindungsaufbau herangezogen werden. Eine Adressierung anhand eines Internetidentifizierers ist insbesondere innerhalb des leitungsvermittelnden Teils Mobilfunknetzwerks 13 nicht möglich, da das SS7 bis auf wenige Ausnahmen keine Übertragung von Buchstaben erlaubt.

Daher ist es vorgesehen, dass die Adressierung einer Anforderung für den Aufbau einer Kommunikationsverbindung, die von dem mobilen Endgerät 10 des Mobilfunkteilnehmers an das Kommunikationsendgerät 11 des IP-Nutzers gesendet wird, ebenfalls anhand einer MSISDN erfolgt, die dem IP-Nutzer zusätzlich zu dem Internetidentifizierer zugeordnet wird. Die Anforderung wird dabei über den Adressserver 17 an den Kommunikationsserver 14 übermittelt, welcher die MSISDN anhand einer in der Adressdatenbank 17 gespeicherten Zuordnung zwischen der MSISDN und dem Internetidentifizierer des IP-Nutzers in den Internetidentifzierer umsetzt, so dass die Anforderung in der zuvor beschriebenen Weise innerhalb des IP-Netzwerks 12 an den Kommunikationsserver 14 weitergeleitet werden kann.

In einer Ausführungsform der Erfindung ist es vorgesehen, dass zwischen dem Internetidentifizierer und der MSISDN des IP-Nutzers des Kommunikationsendgeräts 11 ein eindeutiger Zusammenhang besteht.

Um die Anzahl der benötigten MSISDNs zu reduzieren kann es in einer weiteren Ausführungsform jedoch gleichfalls vorgesehen sein, dass eine MSISDN mehreren IP-Nutzem zugeordnet wird, so dass kein eindeutiger Zusammenhang zwischen der MSISDN und dem Internetidentifizierer besteht, In dieser Ausführungsform wird einem Internetidentifizierer jedoch zusätzlich die MSISDN eines als Kontaktpartner des IP-Nutzers auftretenden Mobilfunkteilnehmers zugeordnet, die im folgenden als Teilnehmernummer bezeichnet wird, so das ein eindeutiger Zusammenhang zwischen dem Internetidentifizierer eines IP-Nutzers und der Kombination aus der dem IP-Nutzer zugeordneten MSISDN und einer Teilnehmernummer besteht. Die Teilnehmernummer wird auch in die von dem mobilen Endgerät 10 gesendete Anforderung für den Aufbau einer Kommunikationsverbindung zu dem Kommunikationsendgerät 11 eingebracht und in dieser Ausführungsform zusätzlich zu der dem IP-Nutzer zugeordneten MSISDN für die Abfrage der Adressdatenbank 18 herangezogen.

Im Falle eines Sprach- und/oder Videoanrufs erfolgt der Aufbau einer Kommunikationsverbindung von dem mobilen Endgerät 10 eines Mobilfunkteilnehmers zu dem Kommunikationsendgerät 11 eines IP-Nutzers unter Verwendung des Adressservers 17 beispielsweise in der folgenden Weise:
Zunächst sendet das mobile Endgerät 10 des Mobilfunkteilnehmers unter Verwendung der MSISDN des IP-Nutzers eine Anforderung an die Mobilvermittlungsstelle 20, in deren Abdeckungsgebiet sich das mobile Endgerät 10 befindet. Dann sendet die Mobilvermittlungsstelle 20 die Anforderung in Form einer Initial Address Message (IAM) gemäß dem ISUP-Protokoll an die Gateway-MSC 15, welche die IAM an den Media-Gateway 16 weiterleitet. Die Weiterleitung der IAM von der Mobilvermittlungsstelle 20 über die Gateway-MSC an den Media-Gateway 16 erfolgt in einer Ausführungsform durch ein so genanntes statisches Routing. Hierzu umfassen die MSISDNs, die IP-Nutzern zugeordnet sind, eine vorgegebene Ziffernfolge, die beispielsweise in den ersten Stellen der MSISDNs enthalten sein kann. An der Ziffernfolge erkennen die Mobilvermittlungsstelle 20 und die Gateway-MSC 16, dass die IAM an den Media-Gateway weiterzuleiten ist. Die Weiterleitung der IAM erfolgt in dieser Ausführungsform anhand einer SS7-Adresse des Media-Gateways 16. In einer weiteren Ausführungsform ist es vorgesehen, dass in dem Heimatregister 21 auch teilnehmerspezifische Daten von IP-Nutzem gespeichert sind, und die IAM anhand dieser Daten an das IP-Netzwerk 12 und insbesondere den Media-Gateway 16 geleitet wird. In dieser Ausführungsform können IP-basierte Netzwerkknoten in dem Mobilfunknetzwerk 13 enthalten sein, die auf das Heimatregister 21 zugreifen können. Ein eingehender Anruf wird dabei zu einem solchen Netzwerkknoten und von diesem zu dem Media-Gateway weitergeleitet.

Der Media-Gateway 16 wandelt die IAM in eine die MSISDN enthaltene SIP-Invite-Nachricht um, die von dem Media-Gateway 16 an den Adressserver 17 weitergeleitet wird. In dem Adressserver 17 wird die in der SIP-Invite-Nachricht enthaltene MSISDN ausgelesen und durch eine Abfrage der Adressdatenbank 18, die gegebenenfalls zusätzlich zu der MSISDN unter Heranziehung der ebenfalls in der IAM und der SIP-Invite-Nachricht enthaltenen Teilnehmernummer des Mobilfunkteilnehmers erfolgt, der Internetidentifizierer des IP-Nutzers ermittelt. Nach der Ermittlung des Internetidentifizierers erzeugt der Adressserver 17 eine neue, den Internetidentifizierer enthaltende SIP-Invite-Nachricht und übermittelt diese an den Kommunikationsserver 14, welcher die Nachricht in der zuvor bereits beschriebenen Weise an das Kommunikationsendgerät 11 weiterleitet, so dass die Kommunikationsverbindung an dem Kommunikationsendgerät 11 angenommen werden kann. Sofern der Kommunikationsserver 14 ein anderes IP-basiertes Protokoll als das SIP verwendet, wird die SIP-Invite-Nachricht vor der Übermittlung an den Kommunikationsserver 14 umkodiert, oder der Adressserver 17 übermittelt anstelle der SIP-Invite-Nachricht eine entsprechende Nachricht des verwendeten Signalisierungsprotokolls an den Kommunikationsserver 14.

Um eine Nachrichten im Rahmen des SMS an das Kommunikationsendgerät 11 zu senden, wird die SMS-Nachricht, zunächst unter Verwendung der MSISDN des IP-Nutzers an die Mobilvermittlungsstelle 20 gesendet, welches die Nachricht an das SMSC 19 weiterleitet. Das SMSC 19 leitet die Nachricht wiederum innerhalb des IP-Netzwerks 12 unter Nutzung eines IP-basierten Protokolls an den Adressserver 17 weiter. In einer Ausführungsform erfolgt die Weiterleitung der Nachricht von dem SMSC 19 an den Adressserver 17 wiederum durch ein statisches Routing, d.h. das SMSC 19 erkennt an einer in der der MSISDN enthaltenen Ziffernfolge, dass die Nachricht an den Adressserver 17 weiterzuleiten ist. Gleichfalls kann es auch vorgesehen sein, dass das SMSC 19 auf teilnehmerspezifische Daten des IP-Nutzers zugreift, die in dem Heimatregister 21 gespeichert sind und Routing-Informationen zur Weiterleitung der Nachricht an den Adressserver 17 enthalten. Die an den Adressserver 17 weitergeleitete Nachricht enthält die MSISDN des IP-Nutzers, die von dem Adressserver 17 herangezogen wird, um den Internetidentifizierer des IP-Nutzers in der Adressdatenbank 18 zu ermitteln. Unter Verwendung des Internetidentifizierers wird die Nachricht dann an den Kommunikationsserver 14 weitergeleitet. Hierzu wird die Nachricht in ein geeignetes Format, wie beispielsweise in ein im Rahmen von Instant Messaging Diensten verwendetes Format oder ein E-Mail-Format umgewandelt und im Rahmen eines entsprechenden Protokolls an den Kommunikationsserver 14 übermittelt. Von dem Kommunikationsserver 14 wird die Nachricht dann an das Kommunikationsendgerät 11 zugestellt oder mittels des Kommunikationsendgeräts 11 von dem Kommunikationsserver 14 abgerufen.

Gleichfalls können auch im Rahmen des MMS Nachrichten unter Verwendung der dem IP-Nutzer zugeordneten MSISDN von dem mobilen Endgerät 10 an das Kommunikationsendgerät 11 gesendet werden. Dabei werden zunächst MMS-Nachricht über den paketvermittelnden Teil des Mobilfunknetzwerks 13, d.h. über den SGSN 25 und den GGSN 26, an das MMSC 27 gesendet. Dieses erkennt anhand der zur Adressierung verwendeten MSISDN, beispielsweise anhand der zuvor bereits erwähnten, in der MSISDN enthaltenen Ziffernfolge, dass die Nachricht an den Adressserver 17 zu übermitteln ist und leitet die Nachricht unter Angabe der MSISDN des IP-Nutzer an den Adressserver 17 weiter. Beim Empfang der Nachricht ermittelt der Adressserver 17 anhand der MSISDN den Internetidentifizierer des IP-Nutzers und übermittelt die Nachricht unter Verwendung des Internetidentifizierers an den Kommunikationsserver 14. Dabei wird die Nachricht vor der Übermittlung an den Kommunikationsserver 14 vorzugsweise in ein geeignetes Format, wie beispielsweise ein E-Mail-Format umgewandelt und im Rahmen eines entsprechenden Protokolls an den Kommunikationsserver 14 übermittelt. Die Formatumwandlung kann in dem MMSC 27 oder in dem Adressserver 17 vorgenommen werden. Von dem Kommunikationsserver 14 wird die Nachricht dann wiederum an das Kommunikationsendgerät 11 zugestellt oder mittels des Kommunikationsendgeräts 11 von dem Kommunikationsserver 14 abgerufen.

Eine Kommunikationsverbindung von dem Kommunikationsendgerät 11 des IP-Nutzers zu dem Endgerät 10 des Mobilfunkteilnehmers wird in einer beispielhaften Ausgestaltung in der folgenden Weise aufgebaut:
Für den Aufbau eines Sprach- und/oder Videoanrufs sendet das Kommunikationsendgerät 11 beispielsweise bereits unter Verwendung der Teilnehmernummer des Mobilfunkteilnehmers eine SIP-Invite-Nachricht an den Kommunikationsserver 14, der diese Nachricht über einen oder mehrere Proxy-Server an den Media-Gateway 16 sendet, wobei insbesondere der Adressserver 17 einen der Proxy-Server bilden kann. Die Adressierung kann dabei beispielsweise anhand einer URI erfolgen, welche sich aus der Teilnehmernummer und einem Domainnamen des Media-Gateway 16 zusammensetzt, so dass die SIP-Invite-Nachricht anhand des enthaltenen Domainnamens an den Media-Gateway 16 weitergeleitet werden kann. In dem Media-Gateway 16 wird die SIP-Invite-Nachricht in eine IAM umgesetzt, die an die Gateway-MSC 15 übermittelt wird. Von der Gateway-MSC 15 wird die IAM innerhalb des Mobilfunknetzwerks 13 in einer dem Fachmann an sich bekannten Weise an die Mobilvermittlungsstelle 20 (Visited-MSC) weitergeleitet, in deren Abdeckungsbereich sich das mobile Endgerät 10 befindet. Die Mobilvermittlungsstelle 20 sendet daraufhin eine Nachricht (Setup-Nachricht) an das mobile Endgerät 10, um dieses über den eingehenden Anruf zu informieren, so dass die Kommunikationsverbindung an dem mobilen Endgerät 10 angenommen werden kann. Die von dem Kommunikationsendgerät 11 gesendete SIP-Invite-Nachricht enthält vorzugsweise auch den Internetidentifizierer des IP-Nutzers. Dabei kann es vorgesehen sein, dass der als Proxy-Server verwendete Adressserver 17 die dem Internetidentifizierer zugeordnete MSISDN durch eine Abfrage der Adressdatenbank 18 ermittelt und in die SIP-Invite-Nachricht einfügt. Die MSISDN kann dann innerhalb des Media-Gateway 16 in die IAM übernommen werden und innerhalb der Setup-Nachricht an das mobile Endgerät 10 übertragen werden.

Zur Übermittlung einer Nachricht von dem Kommunikationsendgerät 11 an das mobile Endgerät 10 unter Nutzung des SMS oder des MMS, wird die Nachricht zunächst in einem geeigneten Format über den Kommunikationsserver 14 und einen oder mehrere Proxy-Server an das SMSC 19 oder das MMSC 27 gesendet. Der Adressserver 17 kann dabei wiederum einen der verwendeten Proxy-Server bilden. Einer der verwendeten Proxy-Server kann dabei auch so ausgestaltet sein, dass er in Abhängigkeit von dem Format der Nachricht den Dienst auswählt, über den die Nachricht an das mobile Endgerät 10 gesendet wird. Beispielsweise kann es vorgesehen sein, dass eine Nachricht in einem Instant-Messaging-Format per SMS an das mobile Endgerät 10 zugestellt und daher an den SMSC 19 übermittelt wird, während eine Nachricht in einem E-Mail-Format per MMS an das mobile Endgerät 10 zugestellt und daher an das MMSC 27 gesendet wird. Von dem SMSC 19 bzw. dem MMSC 27 wird die Nachricht dann in an sich bekannter Weise über den leitungsvermittelnden oder den paketvermittelnden Teil des Mobilfunknetzwerks 13 an das mobile Endgerät 10 übermittelt. Vorzugsweise wird die Nachricht von dem Kommunikationsendgerät 11 unter Angabe des Internetidentifizierers des IP-Nutzers gesendet. Anhand des internetidentifizierers kann durch eine Abfrage der Adressdatenbank 18 die dem IP-Nutzer zugeordnete MSISDN ermittelt und als Absenderangabe zusammen mit der Nachricht an das mobile Endgerät 10 weitergeleitet werden.

Bei dem insoweit zuvor beschriebenen Kommunikationssystem können innerhalb des IP-Netzwerks 12 Internetidentifizierer beim Aufbau von Kommunikationsverbindungen genutzt werden, während der Verbindungsaufbau auf Seiten des Mobilfunknetzwerks 13 ausschließlich auf der Verwendung von MSISDNs basiert. Diese haben gegenüber den Internetidentifizierern jedoch den Nachteil, dass sie von dem Mobilfunkteilnehmer nicht unmittelbar zur Identifizierung, eines IP-Nutzers herangezogen werden können. Die Internetidentifizierer ermöglichen dies hingegen, da sie einen Namen des IP-Nutzers enthalten, der zur unmittelbaren Identifizierung des IP-Nutzers verwendet werden kann. Daher ist es vorgesehen, die für den Verbindungsaufbau verwendeten Internetidentifizierer auch innerhalb des Mobilfunknetzwerks 13 nutzbar zu machen. Hierfür ist es vorgesehen, dass der Internetidentifizierer eines IP-Nutzers zusammen mit der dem IP-Nutzer zugeordneten MSISDN von dem Adressserver 17 an das mobile Endgerät 10 eines Mobilfunkteilnehmers übermittelt wird. Innerhalb des mobilen Endgeräts 10 wird dann eine Zuordnung zwischen dem Internetidentifizierer und der MSISDN des IP-Nutzers in das Adressbuch des mobilen Endgeräts 10 eingetragen.

In einer Ausführungsform der Erfindung erfolgt die Übermittlung eines den Internetidentifizierer und die MSISDN eines IP-Nutzers enthaltenden Dokuments innerhalb einer an das mobile Endgerät 10 gesendeten SMS-Nachricht (SMS: Short Message Service). Das Dokument wird dabei in dem Adressserver 17 erzeugt und über die IP-Verbindung an das SMSC 19 übermittelt, welches eine das Dokument enthaltende Kurznachricht erzeugt und diese in einer dem Fachmann an sich bekannten Weise über die CS-Domäne des Mobilfunknetzwerks 10 an das mobile Endgerät 10 des Mobilfunkteilnehmers weiterleitet.

In einer weiteren Ausgestaltung der Erfindung kann das Dokument auch über den paketvermittelnden Teil des Mobilfunknetzwerks 13 von dem Adressserver 17 an das mobile Endgerät 10 gesendet werden, falls über den paketvermittelnden Teil des Mobilfunknetzwerks 13 eine Verbindung zwischen dem mobilen Endgerät 10 und dem IP-Netzwerk 12 besteht. Die Übermittlung der Dokumente über die paketvermittelnde Verbindung erfolgt anhand eines auf dem IP aufsetzenden Protokolls, wie beispielsweise des Hypertext Transfer Protocol (HTTP), des User Datagram Protocol (UDP) oder des Transmission Control Protocol (TCP).

Gleichfalls kann es auch vorgesehen sein, dass der Adressserver 17 zunächst prüft, ob über den paketvermittelnden Teil des Mobilfunknetzwerks 13 eine Verbindung zu dem mobilen Endgerät 10 besteht, und das Dokument über diese Verbindung an das mobile Endgerät 10 sendet, wenn das Bestehen der Verbindung festgestellt wird. Falls das Bestehen einer derartigen Verbindung nicht festgestellt wird, wird eine das Dokument enthaltende SMS-Nachricht über das Short Message Service Center 19 an das mobile Endgerät 10 gesendet.

Darüber hinaus kann es auch vorgesehen sein, dass das Dokument anhand einer MMS-Nachricht (MMS: Multimedia Message Service) an das mobile Endgerät 10 gesendet wird. Diese MMS-Nachricht kann in dem Fachmann an sich bekannter Weise durch eine an das mobile Endgerät 10 gesendete SMS-Nachricht "angekündigt" werden, und nach Erhalt der SMS-Nachricht automatisch von dem mobilen Endgerät 10 abgerufen werden.

Ausgelöst wird die Übermittlung eines den Internetidentifizierer und die MSISDN eines IP-Nutzers enthaltenden Dokuments in einer Ausgestaltung durch eine erstmalige Anforderung für den Aufbau einer Kommunikationsverbindung von dem Kommunikationsendgerät 11 des IP-Nutzers zu dem mobilen Endgerät 10 des Mobilfunkteilnehmers. Bei dem Empfang der erstmaligen Anforderung in dem Adressserver 17 wird dabei in der Adressdatenbank 18 geprüft, ob dem in der Anforderung enthaltenen Internetidentifizierer bereits eine MSISDN zugeordnet ist. Falls dies nicht der Fall ist, wird diese Zuordnung erzeugt und nachfolgend an das mobile Endgerät 10 übermittelt; ansonsten wird die bereits bestehende Zuordnung von dem Adressserver 17 an das mobile Endgerät 10 übermittelt.

Nach der Übermittlung wird ferner die in der Anforderung enthaltende Teilnehmernummer in dem den Internetidentifizierer enthaltenden Eintrag der Adressdatenbank 18 gespeichert. Bei Empfang einer weiteren von demselben Kommunikationsendgerät 11 gesendeten Anforderung für den Aufbau einer Kommunikationsverbindung zu demselben mobilen Endgerät 10 kann somit in der Adressdatenbank 18 geprüft werden, ob die Zuordnung zwischen dem Internetidentifizierer und der MSISDN bereits an das mobile Endgerät 10 gesendet worden ist und das erneute Senden der Zuordnung vermieden werden.

Falls, wie zuvor beschrieben, eine Mehrfachzuordnung zwischen einer MSISDN und mehreren Internetidentifizierern vorgesehen ist, wird beim Empfang der erstmalige Anforderung für den Aufbau einer Kommunikationsverbindung von dem Kommunikationsendgerät 11 zu dem mobilen Endgerät 10 in der Datenbank eine Zuordnung zwischen dem Internetidentifizierer und der Kombination einer MSISDN und der in der Anforderung enthaltenen Teilnehmernummer erzeugt und in der Adressdatenbank 18 gespeichert. Nachfolgend wird die Zuordnung zwischen dem Internetidentifizierer und der MSISDN an das mobile Endgerät 10 übermittelt. Anhand der bei der Erzeugung der Zuordnung in die Adressdatenbank 18 eingetragenen Teilnehmernummer kann bei Empfang einer weiteren von dem Kommunikationsehdgerät 11 gesendeten Anforderung für den Aufbau einer Kommunikationsverbindung zu demselben mobilen Endgerät 10 geprüft werden, ob die Zuordnung bereits an das mobile Endgerät 10 gesendet worden ist, wodurch eine wiederholte Übermittlung der Zuordnung vermieden werden kann.

Gleichfalls kann es vorgesehen sein, dass der Mobilfunkteilnehmer eine so genannte Kontaktliste erstellt, welche die Internetidentifizierer von ausgewählten IP-Nutzern enthält, bei denen es sich beispielsweise um die IP-Nutzer handelt, mit denen der Mobilfunkteilnehmer häufig kommuniziert bzw. zukünftig kommunizieren möchte. Die Kontaktliste wird vorzugsweise in dem Kommunikationsserver 14 gespeichert und von dem Benutzer beispielsweise mittels eines Endgeräts erstellt, welches direkt über das IP-Netzwerk 12 mit dem Kommunikationsserver 14 verbunden ist. Beispielsweise kann der Mobilfunkteilnehmer dabei neben dem mobilen Endgerät 10 auch über ein mit dem IP-Netzwerk 12 verbundenes Endgerät verfügen, mit dem er den von dem Kommunikationsserver 14 bereitgestellten Kommunikationsdienst nutzt und mit dem er die Kontaktliste erstellt. Von dem Kommunikationsserver 14 wird die Kontaktliste vorzugsweise aufgrund einer Anweisung des Mobilfunknutzers, die beispielsweise über das genannte Endgerät gegeben werden kann, an den Adressserver 14 übertragen. Gleichfalls kann es jedoch auch vorgesehen sein, dass der Mobilfunknutzer die Kontaktliste in geeigneter Weise direkt zu dem Adressserver 17 übermittelt.

Beim Empfang der Kontaktliste stellt der Adressserver 17 zunächst fest, welchen der in der Kontaktliste enthaltenen Internetidentifizierern bereits eine MSISDN in der Adressdatenbank 18 zugeordnet ist. Den Internetidentifizierern, denen bislang keine MSISDN zugeordnet war, wird daraufhin eine neue MSISDN zugeordnet, und die Zuordnung in der Adressdatenbank 18 gespeichert. Nachfolgend werden die Zuordnungen zwischen den in der Kontaktliste enthaltenen Internetidentifizierern und den MSISDNs an das mobile Endgerät 10 des Mobilfunkteilnehmers übertragen. Wenn eine Mehrfachzuordnung zwischen einer MSISDN und mehreren Internetidentifizierern vorgesehen ist, wird beim Empfang der Kontaktliste in dem Adressserver 17 in der Adressdatenbank 18 jeweils eine Zuordnung zwischen den in der Kontaktliste enthaltenen Internetidentifizierer und der Kombination einer MSISDN und der in der Anforderung enthaltenen Teilnehmernummer erzeugt und in der Adressdatenbank 18 gespeichert. Dann werden die Zuordnungen zwischen den Internetidentifizierern und den MSISDNs an das mobile Endgerät 10 übermittelt.

Die an ein mobile Endgerät 10 gesendeten, eine Zuordnung zwischen einem Internetidentifizierer und einer MSISDN enthaltenden Dokumente, umfassen Datenfelder, die den innerhalb des Adressbuchs des mobilen Endgeräts 10 innerhalb eines Eintrags vorgesehenen Feldern entsprechen, und sind vorzugsweise in einem zur Übermittlung von Kontaktdaten vorgesehenen Standardformat ausgeführt. Ein Beispiel für ein derartiges Format ist das bekannte vCard-Format. Gleichfalls kann jedoch auch jedes andere geeignete Format zur Übertragung von Kontaktdaten verwendet werden.

Innerhalb des mobilen Endgeräts 10 des Mobilfunknutzers werden die zuvor beschriebenen Dokumente, welche den Internetidentifizierer eines IP-Nutzers sowie die dem IP-Nutzer zugeordnete MSISDN enthalten, empfangen und von einer mittels des Prozessors ausgeführten Applikationen ausgewertet. Die Applikation kann über einen bestimmten Port innerhalb des mobilen Endgeräts 10 angesprochen werden, an den die Dokumente von dem Adressserver 17 adressiert werden. Die Applikation ist dazu ausgebildet, den in einem empfangenen Dokument enthaltenen Internetidentifizierer sowie die zugehörige MSISDN auszulesen und einen diese Angaben enthaltenen Eintrag des Adressbuchs zu speichern. Hierfür kann beispielsweise eine J2ME-API vorgesehen werden, die es erlaubt, SMS-Nachrichten aufgrund ihrer Adressierung an die Applikation zu übergeben, ohne dass diese an dem mobilen Endgerät 10 dargestellt werden. Die Speicherung des Eintrags erfolgt beispielsweise über eine Schnittstelle, die der Applikation einen Zugriff auf das Adressbuch gestattet. Beispiele für derartige Schnittstellen sind die "Personal Information Management (PIM) APIs" für die "Java^{™} 2 Platform, Micro Edition" (J2ME), die es erlauben Daten aus externen Quellen in das Adressbuch eines mobilen Endgeräts 10 zu importieren.

Aufgrund des Empfangs eines die Zuordnung zwischen einem lnternetidentifizierer und einer MSISDN enthaltenden Dokuments wird mittels der Applikation ein Adressbucheintrag erzeugt. Der Internetidentifizierer des IP-Nutzers wird vorzugsweise in dem Namensfeld des Eintrags gespeichert, und die dem IP-Nutzer zugeordneten MSISDN in dem Rufnummernfeld des Eintrags. Hierzu wird der Internetidentifizierer von dem Adressserver 17 in ein dem Namensfeld eines Adressbucheintrags entsprechendes Namensfeld des Dokuments eintragen und die MSISDN in einem dem Rufnummernfeld des Adressbucheintrags entsprechenden Rufnummernfeld des Dokuments. Hierdurch kann die zur Manipulation des Adressbuchs verwendete Applikation die Felder innerhalb des Adressbucheintrags ermitteln, in die der Internetidentifizierer und die MSISDN einzutragen sind,

Innerhalb des Adressbuchs des mobilen Endgeräts 10 steht die Zuordnung zwischen dem Internetidentifizierer und der MSISDN dann zur Verwendung durch den Mobilfunknutzer zur Verfügung. Hierdurch kann der Internetidentifizierer von dem Mobilfunkteilnehmer insbesondere so genutzt werden, wie dies üblicherweise auch innerhalb des IP-Netzwerks 12 bei Verwendung von direkt mit dem IP-Netzwerk verbundenen Kommunikationsendgeräten möglich ist.

Wenn der Mobilfunkteilnehmer mittels seines mobilen Endgeräts 10 eine Kommunikationsverbindung zu einem IP-Nutzer bzw. dessen Kommunikationsendgerät 11 aufbauen möchte, dann identifiziert er den IP-Nutzer anhand seines Internetidentifizierers innerhalb des Adressbuchs seines mobilen Endgeräts 10 und wählt diesen aus, um die Kommunikationsverbindung aufzubauen. Aufgrund des Auswahl des Internetidentifizierers in dem Adressbuch wird in dem mobilen Endgerät 10 die dem Internetidentifizierer zugeordnete MSISDN des IP-Nutzers ermittelt und es wird eine Anforderung für den Aufbau der Kommunikationsverbindung unter Verwendung der MSISDN an das Mobilfunknetzwerk 13 gesendet. Die Kommunikationsverbindung zu dem Kommunikationsendgerät 11 des IP-Nutzers wird dann in der bereits beschriebenen Weise aufgebaut.

Wenn in dem mobilen Endgerät 10 eine Anforderung für den Aufbau einer Kommunikationsverbindung des Kommunikationsendgeräts 11 des IP-Nutzers empfangen wird, dann kann unter Verwendung des Adressbucheintrags der Internetidentifizierer an der Anzeigeinrichtung des mobilen Endgeräts 10 angezeigt werden, der eine direkt Identifizierung des Anrufers durch den Mobilfunkteilnehmer ermöglicht. Hierzu wird die dem IP-Nutzer zugeordnete MSISDN ausgelesen, die in der Setup-Nachricht enthalten ist, welche in dem mobilen Endgerät 10 als Benachrichtigung über die Anforderung empfangen wird. Anhand des Adressbucheintrags wird dann der Internetidentffizierer ermittelt, dem die MSISDN zugeordnet ist. Dieser wird nachfolgend an der Anzeigeeinrichtung des mobilen Endgeräts 10 zur Anzeige gebracht.

## Patentansprüche

1. Verfahren zum Aufbauen einer Kommunikationsverbindung von einem mit einem leitungsvermittelnden Telefonnetzwerk (13) verbundenen ersten Endgerät (10) eines ersten Teilnehmers zu einem mit einem IP-Netzwerk (12) verbundenen zweiten Endgerät (11) eines zweiten Teilnehmers, wobei das zweite Endgerät (11) innerhalb des IP-Netzwerks (12) anhand eines Internetidentifizierer des zweiten Teilnehmers identifizierbar ist, bei dem dem Internetidentifizierer eine Rufnummer zugeordnet wird, die für den Aufbau einer Kommunikationsverbindung von dem ersten Endgerät (10) zu dem zweiten Endgerät (11) herangezogen wird,
**dadurch gekennzeichnet, dass**
die Zuordnung zwischen dem Internetidentifizierer und der Rufnummer aufgrund eines erstmaligen Empfangs einer von dem zweiten Endgerät (11) gesendeten Anforderung für den Aufbau einer Kommunikationsverbindung zu dem ersten Endgerät (10) innerhalb des IP-Netzwerks (12) an das erste Endgerät (10) übermittelt und in einem in dem ersten Endgerät (10) gespeicherten Adressbuch gespeichert wird,
wobei von dem ersten Endgerät (10) aufgrund einer Auswahl des Internetidentifizierers innerhalb des Adressbuchs eine Anforderung für den Aufbau der Kommunikationsverbindung zu dem zweiten Endgerät (11) unter Verwendung der Rufnummer über das Telefonnetzwerk (13) an das IP-Netzwerk (11) gesendet wird.

2. Verfahren nach Anspruch 1,
**dadurch gekennzeichnet,**
**dass** die Zuordnung zwischen dem Internetidentifizierer und der Rufnummer in einer mit dem IP-Netzwerk (12) verbundenen Adressdatenbank (18) gespeichert wird.

3. Verfahren nach Anspruch 1 oder 2,
**dadurch gekennzeichnet,**
**dass** die Anforderung unter Verwendung des Internetidentifizierers des zweiten Teilnehmers an das zweite Endgerät (11) weitergeleitet wird, wobei der Internetidentifizierer unter Heranziehung der in der Anforderung enthaltenen Rufnummer in der Adressdatenbank (18) ermittelt wird.

4. Verfahren nach einem der vorangegangenen Ansprüche,
**dadurch gekennzeichnet,**
**dass** die Rufnummer mehreren Internetidentifizierern zugeordnet ist, wobei eine eindeutige Zuordnung zwischen dem Internetidentifizierer des zweiten Teilnehmers und einer Kombination aus der Rufnummer und einer dem ersten Teilnehmer zugeordneten Teilnehmernummer besteht.

5. Verfahren nach einem der vorangegangenen Ansprüche,
**dadurch gekennzeichnet,**
**dass** der Internetidentifizierer unter Heranziehung der dem ersten Teilnehmer zugeordneten Teilnehmernummer in der Adressdatenbank (18) ermittelt wird.

6. Verfahren nach einem der vorangegangenen Ansprüche,
**dadurch gekennzeichnet,**
**dass** eine von dem zweiten Endgerät (11) gesendete Anforderung für den Aufbau einer Kommunikationsverbindung zu dem ersten Endgerät (10) unter Angabe der Rufnummer über das Telefonnetzwerk (13) an das erste Endgerät (10) übermittelt wird, wobei aufgrund des Empfangs der Anforderung in dem erste Endgerät (10) anhand des Adressbuchs unter Heranziehung der Rufnummer der Internetidentifizierer des zweiten Teilnehmers ermittelt und an dem ersten Endgerät (10) angezeigt wird.

7. Verfahren nach Anspruch 6,
**dadurch gekennzeichnet,**
**dass** die von dem zweiten Endgerät (11) gesendete Anforderung unter Angabe des Internetidentifizierers des zweiten Teilnehmers an das IP-Netzwerk (12) übermittelt wird, wobei der Internetidentifizierer innerhalb des IP-Netzwerks (12) durch die Rufnummer ersetzt wird, welche anhand des Internetidentifizierers in der Adressdatenbank (18) ermittelt wird, und wobei die Anforderung nachfolgend an das Telefonnetzwerk (13) weitergeleitet wird.

8. Verfahren nach einem der vorangegangenen Ansprüche,
**dadurch gekennzeichnet,**
**dass** die Zuordnung zwischen der Rufnummer und dem Internetidentifizierer aufgrund eines erstmaligen Empfangs einer von dem zweiten Endgerät (11) gesendeten Anforderung für den Aufbau einer Kommunikationsverbindung zu dem ersten Endgerät (11) innerhalb des IP-Netzwerks (12) in der Adressdatenbank (18) gespeichert wird.

9. Verfahren nach einem der vorangegangenen Ansprüche,
**dadurch gekennzeichnet,**
**dass** der erste Teilnehmer eine Kontaktliste erstellt, die in dem IP-Netzwerk (12) verfügbar gemacht wird und wenigstens den Internetidentifizierer des ersten Teilnehmers umfasst, wobei die Zuordnung zwischen dem Internetidentifizierer und der Rufnummer aufgrund eines Empfangs der Kontaktliste in dem IP-Netzwerk (12) an das erste Endgerät (13) gesendet wird.

10. Verfahren nach einem der vorangegangenen Ansprüche,
**dadurch gekennzeichnet,**
**dass** die Zuordnung zwischen dem Internetidentifizierer und der Rufnummer aufgrund des netzwerkseitigen Empfangs der Kontaktliste in der Adressdatenbank (18) gespeichert wird.

11. Verfahren nach einem der vorangegangenen Ansprüche,
**dadurch gekennzeichnet,**
**dass** die Zuordnung zwischen dem Internetidentifizierer und der Rufnummer mittels einer SMS-Nachricht an das erste Endgerät (10) gesendet werden.

12. Verfahren nach einem der vorangegangenen Ansprüche,
**dadurch gekennzeichnet,**
**dass** das erste Endgerät (10) über eine paketvermittelnde Verbindung mit dem IP-Netzwerk (12) verbindbar ist und die Zuordnung zwischen dem Internetidentifizierer und der Rufnummer über die paketvermittelnde Verbindung an das erste Endgerät (10) gesendet wird.

13. Verfahren nach einem der vorangegangenen Ansprüche,
**dadurch gekennzeichnet,**
**dass** innerhalb des erste Endgeräts (10) eine Applikation gespeichert wird, welche aufgrund des Empfangs die Zuordnung zwischen dem Internetidentifizierer und der Rufnummer in dem ersten Endgerät (10) einen die Zuordnung enthaltenden Eintrag in dem Adressbuch des ersten Endgeräts (10) erzeugt.

14. System zum Aufbauen einer Kommunikationsverbindung zwischen einem ersten Endgerät eines ersten Teilnehmers und einem zweiten Endgerät eines zweiten Teilnehmers, wobei das erste Endgerät mit einem leitungsvermittelnden Telefonnetzwerk (13) und das zweite Endgerät mit einem IP-Netzwerk (12) verbundenen sind, wobei das zweite Endgerät (11) innerhalb des IP-Netzwerks (12) anhand eines Internetidentifizierer des zweiten Teilnehmers identifizierbar ist und dem ersten Endgerät eine Rufnummer, die für den Aufbau einer Kommunikationsverbindung von dem ersten Endgerät (10) zu dem zweiten Endgerät (11) herangezogen wird, zugeordnet ist,
**dadurch gekennzeichnet, dass**
die Zuordnung zwischen dem Internetidentifizierer und der Rufnummer aufgrund eines erstmaligen Empfangs einer von dem zweiten Endgerät (11) gesendeten Anforderung für den Aufbau einer Kommunikationsverbindung zu dem ersten Endgerät (10) innerhalb des IP-Netzwerks (12) an das erste Endgerät (10) übermittelt und in einem Adressbuch des ersten Endgeräts (10) gespeichert wird, und wobei das ersten Endgerät (10) dazu ausgestaltet ist, aufgrund einer Auswahl des Internetidentifizierers innerhalb des Adressbuchs eine Anforderung für den Aufbau der Kommunikationsverbindung zu dem zweiten Endgerät (11) unter Verwendung der Rufnummer über das Telefonnetzwerk (13) an das IP-Netzwerk (11) zu senden.

## Claims

1. A method for the establishment of a communication connection between a first terminal device (10) - that belongs to a first subscriber and that is connected to a line-switching telephone network (13) - and a second terminal device (11) - that belongs to a second subscriber and that is connected to an IP network - whereby the second terminal device (11) can be identified within the IP network (12) on the basis of an Internet identifier of the second subscriber, whereby a telephone number is associated with the Internet identifier, and this telephone number is used for the establishment of a communication connection between the first terminal device (10) and the second terminal device (11),
**characterized in that**
the association between the Internet identifier and the telephone number is transmitted to the first terminal device (10) in response to a first-time receipt of a request sent from the second terminal device (11) for the establishment of a communication connection to the first terminal device (10) within the IP network (12), and said association is stored in an address book that is stored in the first terminal device (10),
whereby, on the basis of a selection of the Internet identifier in the address book, the first terminal device (10) sends to the IP network (12) a request for the establishment of the communication connection to the second terminal device (11) via the telephone network (13), making use of the telephone number.

2. The method according to claim 1,
**characterized in that**
the association between the Internet identifier and the telephone number is stored in an address database (18) that is connected to the IP network (12).

3. The method according to claim 1 or 2,
**characterized in that**,
using the Internet identifier of the second subscriber, the request is forwarded to the second terminal device (11), whereby the Internet identifier is ascertained in the address database (18), making use of the telephone number contained in the request.

4. The method according to one of the preceding claims,
**characterized in that**
the telephone number is associated with several Internet identifiers, whereby an unambiguous association exists between the Internet identifier of the second subscriber and a combination consisting of the telephone number and a subscriber number associated with the first subscriber.

5. The method according to one of the preceding claims,
**characterized in that**
the Internet identifier is ascertained in the address database (18), making use of the subscriber number associated with the first subscriber.

6. The method according to one of the preceding claims,
**characterized in that**
a request sent from the second terminal device (11) for the establishment of a communication connection to the first terminal device (10) is transmitted to the first terminal device (10) via the telephone network (13), indicating the telephone number, whereby, in response to the receipt of the request in the first terminal device (10), the Internet identifier of the second subscriber is ascertained on the basis of the address book and making use of the telephone number, and then displayed on the first terminal device (10).

7. The method according to claim 6,
**characterized in that**
the request sent from the second terminal device (11) is transmitted to the IP network (12), indicating the Internet identifier of the second subscriber, whereby the Internet identifier is replaced within the IP network (12) by the telephone number that is ascertained on the basis of the Internet identifier in the address database (18), and whereby the request is subsequently forwarded to the telephone network (13).

8. The method according to one of the preceding claims,
**characterized in that**,
in response to a first-time receipt of a request sent from the second terminal device (11) for the establishment of a communication connection to the first terminal device (10) within the IP network (12), the association between the telephone number and the Internet identifier is stored in the address database (18).

9. The method according to one of the preceding claims,
**characterized in that**
the first subscriber generates a contact list that is made available in the IP network (12) and that comprises at least the Internet identifier of the first subscriber, whereby the association between the Internet identifier and the telephone number is sent to the first terminal device (13) in response to the receipt of the contact list in the IP network (12).

10. The method according to one of the preceding claims,
**characterized in that**
the association between the Internet identifier and the telephone number is stored on the basis of the receipt in the network of the contact list in the address database (18).

11. The method according to one of the preceding claims,
**characterized in that**
the association between the Internet identifier and the telephone number is sent to the first terminal device (10) by means of an SMS message.

12. The method according to one of the preceding claims,
**characterized in that**
the first terminal device (10) can be connected to the IP network (12) via a packet-switching connection, and the association between the Internet identifier and the telephone number is sent to the first terminal device (10) via the packet-switching connection.

13. The method according to one of the preceding claims,
**characterized in that**
within the first terminal device (10), an application is stored that, in response to the receipt of the association between the Internet identifier and the telephone number in the first terminal device (10), generates an entry containing the association in the address book of the first terminal device (10).

14. A system for the establishment of a communication connection between a first terminal device of a first subscriber and a second terminal device of a second subscriber, whereby the first terminal device is connected to a line-switching telephone network (13) and the second terminal device is connected to an IP network (12), whereby the second terminal device (11) can be identified within the IP network (12) on the basis of an Internet identifier of the second subscriber, and a telephone number that is used for the establishment of a communication connection from the first terminal device (10) to the second terminal device (11) is associated with the first terminal device,
**characterized in that**
the association between the Internet identifier and the telephone number is transmitted to the first terminal device (10) in response to a first-time receipt of a request sent from the second terminal device (11) for the establishment of a communication connection to the first terminal device (10) within the IP network (12), and it is stored in an address book of the first terminal device (10), and whereby the first terminal device (10) is configured in such a way that, on the basis of a selection of the Internet identifier in the address book, it sends a request for the establishment of the communication connection to the second terminal device (11) via the telephone network (13) to the IP network (12), making use of the telephone number.

## Revendications

1. Procédé pour établir une liaison de communication d'un premier terminal (10) d'un premier abonné relié à un réseau téléphonique (13) à commutation de circuits vers un deuxième terminal (11) d'un deuxième abonné relié à un réseau IP (12), le deuxième terminal (11) pouvant être identifié au sein du réseau IP (12) à l'aide d'un identifiant Internet du deuxième abonné, selon lequel est associé, à l'identifiant Internet, un numéro d'appel utilisé pour l'établissement d'une liaison de communication du premier terminal (10) vers le deuxième terminal (11),
**caractérisé par**
la transmission, au premier terminal (10), de la mise en correspondance entre l'identifiant Internet et le numéro d'appel sur la base d'une première réception d'une requête émise par le deuxième terminal (11) pour l'établissement d'une liaison de communication vers le premier terminal (10) au sein du réseau IP (12) et son stockage dans un annuaire stocké dans le premier terminal (10),
le premier terminal (10) envoyant au réseau IP (12), sur la base d'une sélection de l'identifiant Internet dans l'annuaire, une requête d'établissement de la liaison de communication vers le deuxième terminal (11) moyennant l'utilisation du numéro d'appel via le réseau téléphonique (13).

2. Procédé selon la revendication 1, **caractérisé en ce que** la mise en correspondance entre l'identifiant Internet et le numéro d'appel est stockée dans une base de données d'adresses (18) reliée au réseau IP (12).

3. Procédé selon la revendication 1 ou 2, **caractérisé en ce que** la requête est retransmise au deuxième terminal (11) moyennant l'utilisation de l'identifiant Internet du deuxième abonné, l'identifiant Internet étant déterminé dans la base de données d'adresses (18) à l'aide du numéro d'appel contenu dans la requête.

4. Procédé selon l'une des revendications précédentes, **caractérisé en ce que** le numéro d'appel est associé à plusieurs identifiants Internet, une association univoque entre l'identifiant Internet du deuxième abonné et une combinaison du numéro d'appel et d'un numéro d'abonné associé au premier abonné étant donnée.

5. Procédé selon l'une des revendications précédentes, **caractérisé en ce que** l'identifiant Internet est déterminé dans la base de données d'adresses (18) à l'aide du numéro d'abonné associé au premier abonné.

6. Procédé selon l'une des revendications précédentes, **caractérisé par** la transmission, au premier terminal (10), d'une requête émise par le deuxième terminal (11) pour l'établissement d'une liaison de communication vers le premier terminal (10) avec mention du numéro d'appel via le réseau téléphonique (13), l'identifiant Internet du deuxième abonné étant déterminé sur la base de la réception de la requête dans le premier terminal (10) à l'aide de l'annuaire en faisant appel au numéro d'appel et étant affiché sur le premier terminal (10).

7. Procédé selon la revendication 6, **caractérisé en ce que** la requête émise par le deuxième terminal (11) est transmise au réseau IP (12) avec mention de l'identifiant Internet du deuxième abonné, l'identifiant Internet étant remplacé, au sein du réseau IP (12), par le numéro d'appel qui est déterminé à l'aide de l'identifiant Internet dans la base de données d'adresses (18), et la requête étant ensuite retransmise au réseau téléphonique (13).

8. Procédé selon l'une des revendications précédentes, **caractérisé par** le stockage, dans la base de données d'adresses (18), de la mise en correspondance entre le numéro d'appel et l'identifiant Internet sur la base d'une première réception d'une requête émise par le deuxième terminal (11) pour l'établissement d'une liaison de communication vers le premier terminal (11) au sein du réseau IP (12).

9. Procédé selon l'une des revendications précédentes, **caractérisé en ce que** le premier abonné établit une liste de contacts qui est rendue disponible dans le réseau IP (12) et qui comprend au moins l'identifiant Internet du premier abonné, la mise en correspondance entre l'identifiant Internet et le numéro d'appel étant envoyée au premier terminal (13) sur la base d'une réception de la liste de contacts dans le réseau IP (12).

10. Procédé selon l'une des revendications précédentes, **caractérisé en ce que** la mise en correspondance entre l'identifiant Internet et le numéro d'appel est stockée dans la base de données d'adresses (18) sur la base de la réception, côté réseau, de la liste de contacts.

11. Procédé selon l'une des revendications précédentes, **caractérisé en ce que** la mise en correspondance entre l'identifiant Internet et le numéro d'appel est envoyée au premier terminal (10) au moyen d'un message SMS.

12. Procédé selon l'une des revendications précédentes, **caractérisé en ce que** le premier terminal (10) peut être relié au réseau IP (12) via une liaison à commutation de paquets et **en ce que** la mise en correspondance entre l'identifiant Internet et le numéro d'appel est envoyée au premier terminal (10) via la liaison à commutation de paquets.

13. Procédé selon l'une des revendications précédentes, **caractérisé en ce qu'**est
stockée, dans le premier terminal (10), une application qui, sur la base de la réception de la mise en correspondance entre l'identifiant Internet et le numéro d'appel dans le premier terminal (10), génère, dans l'annuaire du premier terminal (10), une entrée contenant la mise en correspondance.

14. Système pour établir une liaison de communication entre un premier terminal d'un premier abonné et un deuxième terminal d'un deuxième abonné, le premier terminal étant relié à un réseau téléphonique (13) à commutation de circuits et le deuxième terminal étant relié à un réseau IP (12), le deuxième terminal (11) pouvant être identifié, dans le réseau IP (12), à l'aide d'un identifiant Internet du deuxième abonné et un numéro d'appel utilisé pour établir une liaison de communication du premier terminal (10) vers le deuxième terminal (11) étant associé au premier terminal,
**caractérisé par**
la transmission, au premier terminal (10), de la mise en correspondance entre l'identifiant Internet et le numéro d'appel sur la base d'une première réception d'une requête émise par le deuxième terminal (11) pour l'établissement d'une liaison de communication vers le premier terminal (10) au sein du réseau IP (12), et son stockage dans un annuaire du premier terminal (10), le premier terminal (10) étant conçu pour envoyer au réseau IP (11), sur la base d'une sélection de l'identifiant Internet dans l'annuaire, une requête d'établissement de la liaison de communication vers le deuxième terminal (11) moyennant l'utilisation du numéro d'appel via le réseau téléphonique (13).
